# EUROPÄISCHE PATENTSCHRIFT

(11) **EP 1 883 757 B1**
(45) Veröffentlichungstag und Bekanntmachung des Hinweises auf die Patenterteilung: **08.04.2009**
(21) Anmeldenummer: 06753668.0
(22) Anmeldetag: 17.05.2006
(51) Int. Cl.: F16D 65/12

(54) **BREMSSCHEIBEN-NABENVERBINDUNG**
BRAKE DISC AND HUB CONNECTION
SYSTEME DE LIAISON DISQUE DE FREIN-MOYEU DE FREIN

(30) Priorität: 17.05.2005 DE 102005023380
(43) Veröffentlichungstag der Anmeldung: 06.02.2008
(73) Patentinhaber: KNORR-BREMSE SYSTEME FÜR NUTZFAHRZEUGE GMBH, 80809 München (DE)
(72) Erfinder: PAHLE, Wolfgang, 83707 Bad Wiessee (DE)
(74) Vertreter: Mattusch, Gundula
(86) Internationale Anmeldenummer: PCT/EP2006/004644
(87) Internationale Veröffentlichungsnummer: WO 2006/122766

(56) Entgegenhaltungen:
- DE-A1- 1 945 934
- DE-A1- 19 836 688
- US-A- 3 754 624
- US-A- 5 297 660
- US-A1- 2005 082 125

## Beschreibung

Die vorliegende Erfindung betrifft eine Bremscheiben-/Nabenverbindung entsprechend dem Oberbegriff des Anspruchs 1.

Mittels Bremsscheiben wird ein Fahrzeug durch die Umwandlung von kinetischer Energie in Wärme verzögert, wobei Bremsbeläge reibend an der Bremsscheibe anliegen.

Beim Bremsvorgang muss die Bremsscheibe einerseits Umfangskräfte an ein Rad weiterleiten, an dem die Bremsscheibe mittelbar angeschlossen ist. Andererseits muss die Bremsscheibe beim Bremsen entstehende Reibungswärme speichern und an die Umgebung abführen.

Das Zusammenwirken dieser Einflüsse kann bei hohen Beanspruchungen zu einem Fließen des Bremsscheibenmaterials und bei einer anschließenden Abkühlung zu Oberflächenrissen führen. Dabei treten diese Risse besonders schnell auf, wenn konstruktionsbedingt eine Wärmeausdehnung der Bremsscheibe unterdrückt wird und somit zusätzliche Wärmespannungen entstehen.

Dieses Problem wird durch die stoffliche Trennung der Bremsscheibe von der Bremsscheibennabe reduziert, an der die Bremsscheibe als separates Bauteil befestigt ist. Die Bremsscheibe hat somit die Möglichkeit, sich unter Wärmeeinfluss radial auszudehnen.

Um dies zu erreichen, ist es bekannt, die Bremsscheibe lediglich in geringem Umfang radial an der Bremsscheibennaben zu fixieren, so dass sich die Bremsscheibe bei Erwärmung relativ frei radial ausdehnen kann.

Trotzdem kann es zu Rissen in der Bremsscheibe kommen, die unter Umständen zu einem kompletten Durchriss führen mit der Folge, dass aufgrund der geringen radialen Fixierung der Bremsscheibe ganze Bremsscheibensegmente ausbrechen. Diese Teile können explosionsartig nach außen geschleudert werden, wodurch sich naturgemäß ein erhebliches Gefährdungspotential ergibt.

Aus der DE 103 21 795 B3 ist es bekannt, die Zwischenelemente nicht als Bolzen sondern als Blechbiegeteile auszubilden, welche die vorstehend beschriebene Problematik aber nicht beheben.

Die DE 18 36 832 U zeigt als Zwischenelemente eine Exzenterrollenanordnung mit den Merkmalen des Oberbegriffs des Anspruchs 1.

Zum Hintergrund werden ferner die DE 100 46 705 C1, die DE 101 59 799 A1, die DE 199 18 069 A1 und die DE 19 14 409 A genannt.

Eine weitere gattungsgemäße Bremsscheiben-/Nabenverbindung ist aus der DE 19 45 934 A1 bekannt. Die darin gezeigten und beschriebenen Zwischenelemente sind als Spannelemente wie beispielsweise Spannhülsen ausgebildet, durch die beim Bremsen auftretende Bremsmomente von der Bremsscheibe elastisch auf die Bremsscheibennabe übertragen werden.

In der US 2005/0082125 A1 ist ebenfalls eine Bremsscheiben-/Nabenverbindung geoffenbart, in der als Zwischenelemente Bolzen in Ausnehmungen einliegend, die sich einander gegenüberliegend in der Bremsscheibe und in der Bremsscheibennabe vorgesehen sind.

Eine weitere Bremsscheiben-/Nabenverbindung ist aus der EP.1 3 84 009 B1 bekannt, bei der die Zwischenelemente aus Bolzen bestehen, die in zwischen den Nocken und den Abstützelementen gebildeten Zwischenräumen einliegen und so eine Übertragung des Bremsmomentes von der Bremsscheibe auf die Bremsscheibennabe ermöglichen.

Zwar kann sich bei dieser Konstruktion die Bremsscheibe radial ausdehnen, eine Sicherung, die verhindert, dass bei einem Bremsscheibenriss Teile der Bremse nach außen geschleudert werden, ist jedoch nicht vorhanden.

Der vorliegenden Erfindung liegt daher die Aufgabe zugrunde, eine Bremsscheiben-/Nabenverbindung der gattungsgemäßen Art so weiter zu entwickeln, dass die Betriebssicherheit der Bremsscheibe verbessert wird.

Diese Aufgabe wird durch eine Bremsscheiben-/Nabenverbindung gelöst, die die Merkmale des Anspruchs 1 aufweist.

Danach liegt jedes Zwischenelement sowohl am zugeordneten Abstützelement in einer Vertiefung durch Formgebung radial gesichert an als auch am Nocken in einer Vertiefung durch Formgebung radial gesichert an.

Durch diese konstruktive Ausbildung ist eine Bremsscheiben-/Nabenverbindung geschaffen, bei der ein Absprengen von Bremsscheibensegmenten, die durch einen durchgehenden Riss des Bremsringes entstanden sind, praktisch ausgeschlossen ist.

Die Zwischenelemente dienen sozusagen als radiale Sicherung, die solche Bremsscheibensegmente in ihrer Position halten und somit die Funktionsfähigkeit der Bremse so weit erhalten, dass kein Totalausfall der Bremse entsteht. Die Zwischenelemente dienen somit einer weitgehenden Verschiebesicherung der Bremsscheibe zur Bremsscheibennabe, wobei die Wärmeausdehnung der Bremsscheibe gegenüber der Bremsscheibennabe im Funktionsfall dadurch gewährleistet ist, dass das Zwischenelement mit geringem radialen Spiel am Abstützelement und/oder Nocken anliegt.

Hierzu kann vorgesehen sein, dass das jeweilige Zwischenelement vom zugeordneten Nocken auf der der Bremsscheibennaben im Übrigen abgewandten Seite in radialer Richtung bereichsweise in geringem Abstand überdeckt ist. Das in diesem Fall verschiebegesichert am Abstützelement der Bremsscheibe anliegende Zwischenelement kann bei der Ausdehnung der Bremsscheibe entsprechend dem Abstandsmaß radial wandern. Prinzipiell denkbar ist aber auch, das Abstützelement so auszubilden, dass es das Zwischenelement in dem nach innen gerichteten radialen Bereich mit geringem Abstand überdeckt, während es verschiebegesichert oder ebenfalls geringfügig bewegbar am Nocken anliegt.

Um eine Wärmeübertragung von der Bremsscheibe auf die Bremsscheibennabe zu minimieren besteht das Zwischenelement bevorzugt aus einem Stahl mit geringer Wärmeleitfähigkeit, beispielsweise aus rostfreiem Stahl.

Das Zwischenelement kann als ein aus einem Blech gefaltetes Flachteil ausgebildet sein, das nahezu den gesamten, zwischen dem Nocken und dem Abstützelement vorhanden Zwischenraum ausfüllt.

Denkbar ist aber auch, das Zwischenelement als Bolzen auszubilden, wie er in der genannten gattungsgemäßen EP 1 384 009 B1 gezeigt ist.

Abgesehen von den Berührungsbereichen Bremsscheibe-Bolzen-Bremsscheibennabe besteht kein direkter Kontakt zwischen dem Abstützelement und dem Nocken. Im übrigen Bereich kann die Wärme nur durch Strahlung von der Bremsscheibe auf die Bremsscheibennabe übergehen, was insofern vorteilhaft ist, als der Wärmetransport durch Strahlung mit zunehmendem Abstand des wärmeabgebenden zum wärmeaufnehmenden Teil abnimmt, hier also die Breite des Zwischenraumes, und wesentlich geringer ist als durch direkten Kontakt der Bauelemente zueinander.

Der Kontaktbereich des Bolzens am Abstützelement bzw. am Nocken ist bei sehr hartem Material im ungünstigsten Fall auf eine Linienberührung beschränkt, wodurch es zu lokalen Überlastungen und plastischen Verformungen kommen kann. Um dies zu verhindern, sollte der Bolzen eine hohe elastische Verformungsfähigkeit aufweisen. Hierzu kann der Bolzen als Hohlkörper, vorzugsweise rohrförmig ausgebildet sein. Die Kontaktbereiche vergrößern sich dadurch und auftretende Spannungen werden reduziert.

Vorzugsweise ist das Zwischenelement als Bolzen ausgebildet, der - teilweise - in der Vertiefung des Abstützelementes und - teilweise - in der Vertiefung des Nockens einliegt. Das derart ausgebildete Zwischenelement ist preisgünstig herstellbar und sorgt dennoch für eine hervorragende Sicherung der Bremsscheibe im Sinne der Erfindung.

Vorzugsweise liegt bei einer Ausführung des Zwischenelementes als Bolzen dieser - aufgrund der relativ geringeren Festigkeit der Bremsscheibe gegenüber der Bremsscheibennabe - der Bolzen flächig in einer Vertiefung des Abstützelementes, so dass der Bolzen hier teilweise flächig umschlossen ist. Dem gegenüber liegt der Bolzen lediglich in einem Teilbereich in einer Vertiefung des Nockens bzw. dort nicht unbedingt flächig an.

Der Bolzen ist vorzugsweise im Querschnitt kreisförmig ausgebildet. Denkbar ist es auch, den Bolzen im Querschnitt elliptisch oder als regelmäßiges Vieleck auszubilden.

Alternativ sind auch Zwischenelemente in Streifenform denkbar.

Kostengünstig lassen sich diese aus einem streifenförmigen Blech realisieren.

Vorzugsweise sind dabei die beiden sich gegenüber liegenden Kanten des Bleches als Verdickung ausgebildet, die eine demgegenüber abgesenkte Fläche begrenzen, an der das zugeordnete Abstützelement anliegt.

Dabei ist ferner vorzugsweise an der der abgesenkten Fläche gegenüber liegenden Seite ein Vorsprung angeformt ist, der in der Vertiefung einliegt, wobei diese rinnenförmig ausgebildet ist.

Vorzugsweise liegt damit wiederum das streifenförmige Zwischenelement in radialer Richtung formschlüssig am Abstützelement an.

Auch für die radiale Sicherung des flächigen Zwischenelementes kann der Nocken eine Vertiefung aufweisen, in der dann ein entsprechend angeformter Vorsprung des Zwischenelementes einliegt, wobei sowohl der Vorsprung wie auch die daran angepasste Vertiefung so ausgebildet sein können, dass sich der genannte geringe Überdeckungsabstand zwischen dem Nocken und dem Zwischenelement ergibt.

Weitere vorteilhafte Ausbildungen der Erfindung sind in den übrigen Unteransprüchen gekennzeichnet.

Ausführungsbeispiele der Erfindung werden nachfolgend anhand der beigefügten Zeichnungen beschrieben.

Es zeigen:
- Figur 1: eine erfindungsgemäße Bremsscheiben-/Nabenverbindung in einer Exp- losionsdarstellung
- Figur 2: eine Einzelheit der Bremsscheiben-/Nabenverbindung entsprechend der Figur 1 in einer Draufsicht
- Figur 3: ein weiteres Ausführungsbeispiel der Erfindung in einer Teilansicht e- benfalls in einer Draufsicht

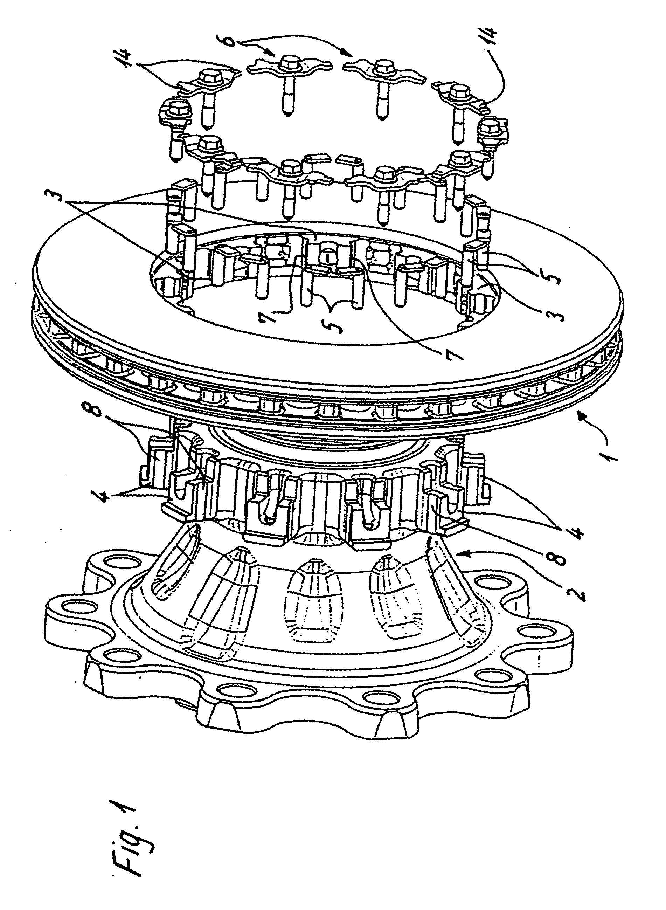

In der Figur 1 ist in einer Sprengbilddarstellung eine Bremsscheiben-/Nabenverbindung zur Verbindung einer Bremsscheibe 1 mit einer Bremsscheibennabe 2 dargestellt. Dabei weist die ringförmige Bremsscheibe 1 am inneren Umfang Abstützelemente 3 auf, während die Bremsscheibennabe 2 am äußeren Umfang mit Nocken 4 versehen ist, die im Sinne einer Verzahnung mit den Abstützelementen 3 korrespondieren.

Zwischen den Abstützelementen 3 und den Nocken 4 sind Zwischenräume 10 gebildet, in die Zwischenelemente 5 ragen, durch die ein Bremsmoment von der Bremsscheibe 1 auf die Bremsscheibennabe 2 übertragbar ist.

Erfindungsgemäß liegt jedes Zwischenelement 5 sowohl am zugeordneten Abstützelement 3 wie auch am zugeordneten Nocken 4 durch Formgebung radial gesichert an.

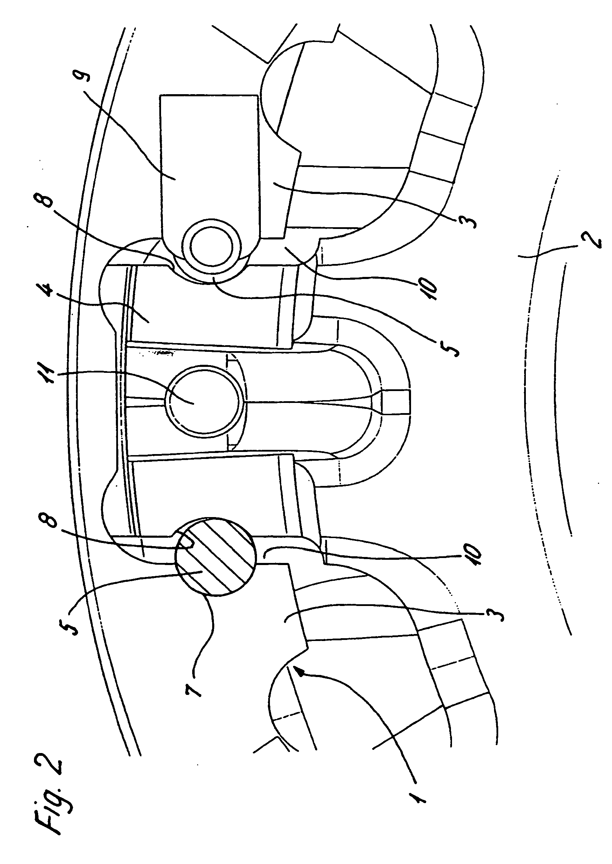

Bei dem in den Figuren 1 und 2 gezeigten Ausführungsbeispiel der Erfmdung bestehen die Zwischenelemente 5 aus hier zylindrischen Bolzen, die jeweils in einer Vertiefung 7 des Abstützelementes 3 und in einer Vertiefung 8 des Nockens 4 einliegen.

Diese Vertiefungen 8, 7 der Nocken 4 und der Abstützelemente 3 sind in Flächen ausgebildet, welche in Hinsicht auf die Bremsscheibendrehachse ganz oder im Wesentlichen (nicht mehr als 20° geneigt) radial verlaufen. In Fig. 2 sind dabei die sich in Umfangsrichtung erstreckenden Vertiefungen 7, 8 einander gegenüberliegend ausgebildet. Die Zwischenelemente 5 greifen ferner derart in die Vertiefungen 8, 7 ein, dass sie radial nach innen hin und nach außen hin jeweils durch an die Vertiefungen angrenzendes Material der Nocken 4 und der Abstützelemente 3 gesichert sind.

Insbesondere in der Figur 2 ist links zu erkennen, dass die Vertiefung 7 in ihrer Krümmung dem Radius des Zwischenelementes 5 entspricht, so dass dieses mit einem Teil seiner Mantelfläche in der Vertiefung 7 spielfrei einliegt.

Dem gegenüber ist die Krümmungskurve der Vertiefung 8 des Nockens 4 flacher als der Krümmungsradius des Zwischenelementes 5, so dass das Zwischenelement 5 auf der der Bremsscheibennabe 2 im Übrigen abgewandten Seite in radialer Richtung bereichsweise im geringen Abstand überdeckt ist. Hierdurch ist ein Freischnitt geschaffen, durch den bei einer radialen Wärmeausdehnung sich die Bremsscheibe 1 relativ zur Bremsscheibennabe 2 in radialer Richtung bewegen kann und zwar so weit, bis das Zwischenelement 5 im oberen Bereich an der Vertiefung 8 anliegt.

Die Vertiefung 8 bildet also eine radiale Begrenzung des Zwischenelementes 5 und somit der Bremsscheibe 1, durch die wirksam verhindert wird, dass ein Bremsscheibensegment bei einer möglichen Rissbildung radial nach außen getrieben werden kann. Insofern ist mit geringem konstruktiven Aufwand eine Fliehkraftsicherung erreicht.

In an sich bekannter Weise ist die Bremsscheibe 1 axial durch mehrere über den Umfang verteilte Haltebügel 6 an der Bremsscheibenabe 2 befestigt, wobei jeder Haltebügel 6 zwei seitlich sich erstreckende Federlaschen 14 aufweist, die jeweils eines der bolzenförmigen Zwischenelemente 5 überdecken und dies in einer axialen Richtung sichern, wobei ein Gewindebolzen des Haltebügels 6 in eine Gewindebohrung 11 des Nockens 4 eingeschraubt ist.

Eine axiale Sicherung des Zwischenelementes in die andere Richtung erfolgt durch eine am Zwischenelement 5 angeschweißte Lasche 9, die auf dem zugeordneten Abstützelement 3 aufliegt und insoweit einen Anschlag bildet.

An Stelle eines runden Querschnitts kann das bolzenförmige Zwischenelement 5 auch eine andere Querschnittsform aufweisen.

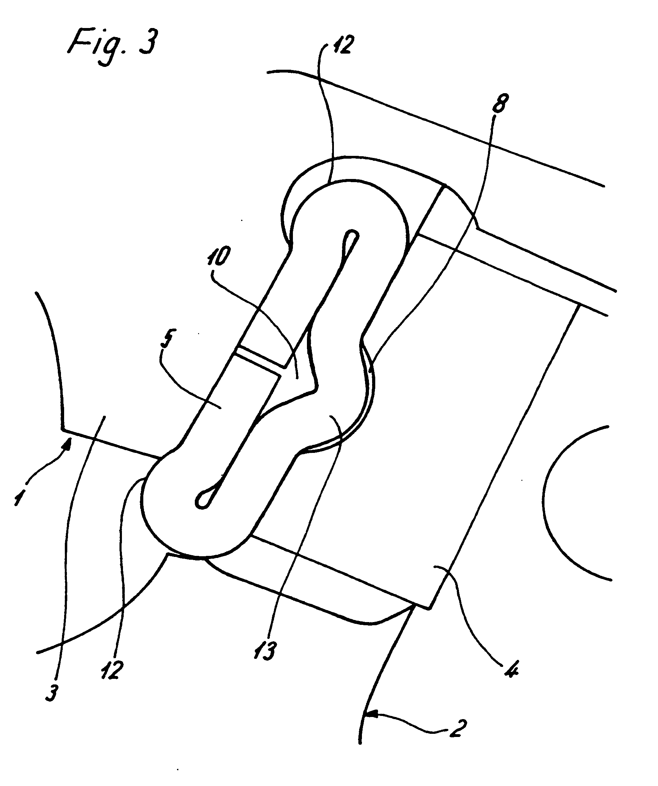

Als weiteres Ausführungsbeispiel ist in der Figur 3 das Zwischenelement als ein im wesentlichen streifenförmiges Blechteil ausgebildet, das an beiden, die Außenkanten bildenden Endbereichen jeweils eine Verdickung 12 aufweist, zwischen denen in einem sozusagen abgesenkten Bereich ein Teil des Abstützelementes 3 einliegt, wobei das Zwischenelement 5 in radialer Richtung am Abstützelement 3 verschiebegesichert gehalten ist.

Diesem abgesenkten Bereich gegenüberliegend ist ein Vorsprung 13 vorgesehen, der in die Vertiefung 8 des Nockens 4 eingreift, wobei der Vorsprung 13 mit einem gewissen Spiel in der Vertiefung 8 einliegt, jedoch in radialer Richtung nach Überwindung dieses Spiels bei einer Ausdehnung der Bremsscheibe 1 an der Wandung der Vertiefung 8 anschlägt. Im Übrigen wird der zwischen dem Stützelement 3 und den Nocken 4 gebildete Zwischenraum 10 durch das streifenförmige Zwischenelement 5 nahezu vollständig ausgefüllt.

Da jedes Zwischenelement 5 am zugeordneten Abstützelement 3 und am Nocken 4 durch Formgebung radial gesichert anliegt, wird die Scheibe deutlich sicherer als nach dem Stand der Technik an der Nabe gesichert.

### Bezugszeichenliste

- 1: Bremsscheibe
- 2: Bremsscheibennabe
- 3: Abstützelement
- 4: Nocken
- 5: Zwischenelement
- 6: Haltebügel
- 7: Vertiefung
- 8: Vertiefung
- 9: Lasche
- 10: Zwischenraum
- 11: Gewindebohrung
- 12: Verdickung
- 13: Vorsprung
- 14: Federlasche

## Patentansprüche

1. Bremsscheiben-/Nabenverbindung zur Verbindung einer Bremsscheibe (1) mit einer Bremsscheibennabe (2), mit folgenden Merkmalen:
a) die Bremsscheibe (1) weist am inneren Umfang Abstützelemente (3) auf,
b) die Bre msscheibennabe (2) ist am äußeren Umfang mit Nocken (4) versehen,
c) zwischen der Bremsscheibennabe (2) und der Bremsscheibe (1) sind in Umfangsrichtung Zwischenelemente (5) verteilt, die in sich zwischen den Nocken (4) und den Abstützelementen (3) vorgesehene Zwischenräume (10) ragen und eine Übertragung des Bremsmomentes von der Bremsscheibe (1) auf die Bremsscheibennabe (2) gewährleisten,
d) jedes Zwisc henelement (5) liegt sowohl am zugeordneten Abstützelement (3) in einer Vertiefung (7) durch Formgebung radial gesichert als auch am Nocken (4) in einer Vertiefung (8) durch Formgebung radial gesichert an,
**dadurch gekennzeichnet, dass**
e) jedes Zwischenelement (5) mit geringem radialen Spiel in einer Vertiefung (8) des Nockens (4) und/oder einer Vertiefung (7) des Abstützelementes (3) einliegt.

2. Bremsscheiben-/Nabenverbindung nach Anspruch 1, **dadurch gekennzeichnet, dass** jedes Zwischenelement (5) vom zugeordneten Nocken (4) auf der der Bremsscheibennabe (2) im Übrigen abgewandten Seite in radialer Richtung bereichsweise in geringem Abstand überdeckt ist.

3. Bremsscheiben-/Nabenverbindung nach einem der vorhergehenden Ansprüche, **dadurch gekennzeichnet, dass** das Zwischenelement (5) als Bolzen ausgebildet ist, der in einer Vertiefung (7) des Abstützelementes (3) und einer Vertiefung (8) des Nockens (4) einliegt.

4. Bremsscheiben-/Nabenverbindung nach einem der vorhergehenden Ansprüche, **dadurch gekennzeichnet, dass** der Bolzen (5) im Querschnitt kreisförmig ausgebildet ist.

5. Bremsscheiben-/Nabenverbindung nach einem der vorhergehenden Ansprüche, **dadurch gekennzeichnet, dass** der Bolzen (5) im Querschnitt elliptisch ausgebildet ist.

6. Bremsscheiben-/Nabenverbindung nach einem der vorhergehenden Ansprüche, **dadurch gekennzeichnet, dass** der Bolzen (5) im Querschnitt als regelmäßiges Vieleck ausgebildet ist.

7. Bremsscheiben-/Nabenverbindung nach einem der vorhergehenden Ansprüche, **dadurch gekennzeichnet, dass** das Zwischenelement (5) in radialer Richtung formschlüssig am Abstützelement (3) anliegt.

8. Bremsscheiben-/Nabenverbindung nach einem der vorhergehenden Ansprüche, **dadurch gekennzeichnet, dass** der Bolzen (5) als Hohlkörper, vorzugsweise rohrförmig ausgebildet ist.

9. Bremsscheiben-/Nabenverbindung nach einem der vorhergehenden Ansprüche, **dadurch gekennzeichnet, dass** das Zwischenelement (5) aus einem Stahl mit geringer Wärmeleitfähigkeit, vorzugsweise aus einem rostfreiem Stahl besteht.

10. Bremsscheiben-/Nabenverbindung nach einem der vorhergehenden Ansprüche, **dadurch gekennzeichnet, dass** der Krümmungsradius der Vertiefung (7) des Abstützelementes (3) dem Radius des zylinderförrnigen Zwischenelementes (5) entspricht und die Krümmung der Vertiefung (8) des Nockens (4) größer ist als der Radius des Zwischenelementes (5).

11. Bremsscheiben-/Nabenverbindung nach einem der vorhergehenden Ansprüche, **dadurch gekennzeichnet, dass** der Bolzen (5) endseitig eine Lasche (9) aufweist, die am Abstützelement (3) anliegt.

12. Bremsscheiben-/Nabenverbindung nach einem der vorhergehenden Ansprüche, **dadurch gekennzeichnet, dass** mit jedem Nocken (4) ein Haltebügel (6) verbunden ist, der zwei seitlich sich erstreckende Federlaschen (14) aufweist, die jeweils ein Zwischenelement (5) stirnseitig überdecken.

13. Bremsscheiben-/Nabenverbindung nach einem der vorhergehenden Ansprüche, **dadurch gekennzeichnet, dass** das Zwischenelement (5) streifenförmig ausgebildet ist.

14. Bremsscheiben-/Nabenverbindung nach einem der vorhergehenden Ansprüche, **dadurch gekennzeichnet, dass** das Zwischenelement (5) aus einem streifenförmigen Blech besteht.

15. Bremsscheiben-/Nabenverbindung nach einem der vorhergehenden Ansprüche, **dadurch gekennzeichnet, dass** die beiden sich gegenüber liegenden Kanten des Bleches als Verdickung (12) ausgebildet sind, die eine demgegenüber abgesenkte Fläche begrenzen, an der das zugeordnete Abstützelement (3) anliegt.

16. Bremsscheiben-/Nabenverbindung nach Anspruch 15, **dadurch gekennzeichnet, dass** an der der abgesenkten Fläche gegenüber liegenden Seite ein Vorsprung (13) angeformt ist, der in der Vertiefung (8) einliegt, wobei diese rinnenförmig ausgebildet ist.

17. Bremsscheiben-/Nabenverbindung nach einem der vorhergehenden Ansprüche 14 oder 15, **dadurch gekennzeichnet, dass** das streifenförmige Zwischenelement (5) in radialer Richtung formschlüssig am Abstützelement (3) anliegt.

18. Bremsscheiben-/Nabenverbindung nach einem der vorhergehenden Ansprüche, **dadurch gekennzeichnet, dass** die Vertiefungen (7, 8) in Flächen der Nocken und der Abstützelemente ausgebildet sind, welche in Hinsicht auf die Bremsscheibendrehachse ganz oder im wesentlichen radial verlaufen.

19. Bremsscheiben-/Nabenverbindung nach einem der vorhergehenden Ansprüche, **dadurch gekennzeichnet, dass** die Zwischenelemente (5) derart in die Vertiefungen (7, 8) eingreifen, dass sie radial nach innen hin und nach außen hin jeweils durch an die Vertiefungen angrenzendes Material der Nocken (4) und der Abstützelemente (3) gesichert sind.

## Claims

1. Brake disc/hub connecting assembly, for connecting a brake disc (1) to a brake disc hub (2), presenting the following features:
(a) said brake disc (1) comprises supporting elements (3) on the inner periphery,
(b) said brake disc hub (2) is provided with cams (4) on the outer periphery
(c) intermediate elements (5) are distributed between said brake disc hub (2) and said brake disc (1), which project into spaces (10) provided between said cams (4) and said supporting elements (3) and ensure transmission of the braking momentum from said brake disc (1) to said brake disc hub (2),
(d) each intermediate element (5) bears against both the associated supporting element (3), with radial locking by shaping in a recess (7), and said cam (4), with radial locking by shaping in a recess (8),
**characterised in that**
(e) each intermediate element (5) is engaged with slight radial play in a recess (8) in said cam (4) and/or in a recess (7) of said supporting element (3).

2. Brake disc/hub connecting assembly according to Claim 1, **characterised in that** each intermediate element (5) is covered by the associated cam (4) in specified regions, at a short distance, in a radial direction on the side turned away from said brake disc hub (2) in all other respects.

3. Brake disc/hub connecting assembly according to any of the preceding Claims, **characterised in that** said intermediate element (5) is configured in the form of a bolt engaging in a recess (7) of said supporting element (3) and in a recess (8) of said cam (4).

4. Brake disc/hub connecting assembly according to any of the preceding Claims, **characterised in that** said bolt (5) is configured to have a circular cross-section.

5. Brake disc/hub connecting assembly according to any of the preceding Claims, **characterised in that** said bolt (5) is configured to have an elliptical cross-section.

6. Brake disc/hub connecting assembly according to any of the preceding Claims, **characterised in that** the cross-sectional area of said bolt (5) has the shape of a regular polygon.

7. Brake disc/hub connecting assembly according to any of the preceding Claims, **characterised in that** said intermediate element (5) bears positively against said supporting element (3) in a radial direction.

8. Brake disc/hub connecting assembly according to any of the preceding Claims, **characterised in that** said bolt (5) has the configuration of a hollow body, preferably in a tubular shape.

9. Brake disc/hub connecting assembly according to any of the preceding Claims, **characterised in that** said intermediate element (5) consists of steel having a low thermal conductivity, preferably of a stainless steel.

10. Brake disc/hub connecting assembly according to any of the preceding Claims, **characterised in that** the radius of curvature of said recess (7) in said supporting element (3) corresponds to the radius of said cylindrical intermediate element (5) and that the curvature of said recess (8) in said cam (4) exceeds the radius of said intermediate element (5).

11. Brake disc/hub connecting assembly according to any of the preceding Claims, **characterised in that** said bolt (5) presents a tab (9) on its terminal side, which bears against said supporting element (3).

12. Brake disc/hub connecting assembly according to any of the preceding Claims, **characterised in that** a retaining bow (6) having two laterally extending resilient tabs (14) whereof each covers an intermediate element (5) on the face side.

13. Brake disc/hub connecting assembly according to any of the preceding Claims, **characterised in that** said intermediate element (5) has a strip-shaped configuration.

14. Brake disc/hub connecting assembly according to any of the preceding Claims, **characterised in that** said intermediate element (5) consists of a strip-shaped sheet metal part.

15. Brake disc/hub connecting assembly according to any of the preceding Claims, **characterised in that** the two opposing edges of said metal sheet are formed as thickened part (12), limiting an area recessed relative to them, against which the associated supporting element (3) is bearing.

16. Brake disc/hub connecting assembly according to Claim 15, **characterised in that** on the side opposite to said recessed area, a projection (13) is integrally moulded which engages into said recess (8), with the latter being formed as trough.

17. Brake disc/hub connecting assembly according to any of the preceding Claims 14 or 15, **characterised in that** said strip-shaped intermediate element (5) positively bears against said supporting element (3) in a radial direction.

18. Brake disc/hub connecting assembly according to any of the preceding Claims, **characterised in that** said recesses (7, 8) are formed in surfaces of said cams and said supporting elements, which extend along an entirely or substantially radial direction with respect to the axis of rotation of the brake disc.

19. Brake disc/hub connecting assembly according to any of the preceding Claims, **characterised in that** said intermediate elements (5) engage into said recesses (7, 8) in such a way that they are radially locked towards the inside and towards the outside by respective material of said cams (4) and said supporting elements (3) joining said recesses.

## Revendications

1. Ensemble de raccord disque de frein/moyeu de disque de frein à raccorder un disque de frein (1) à un moyeu de disque de frein (2), présentant les caractéristiques suivantes:
a) ledit disque de frein (1) comprend des éléments d'appui (3) à sa périphérie intérieure
b) ledit moyeu de disque de frein (2) est pourvu des ergots à sa périphérie extérieure
c) des éléments intermédiaires (5) sont distribués entre ledit moyeu de disque de frein 82) et ledit disque de frein (1), qui font saillie dans des espaces (10) formés entre lesdits ergots (4) et lesdits éléments d'appui (3) et assurent la transmission du couple de freinage à partir dudit disque de frein (1) audit moyeu de disque de frein (2)
d) chaque élément intermédiaire (5) porte contre les deux, ledit élément d'appui y affecté (3), par serrage radial par formation dans un creux, et ledit ergot (4), par serrage radial par formation dans un creux (8)
**caractérisé en ce que**
e) chaque élément intermédiaire (5) se trouve en prise, à petit jeu radial, dans un creux (8) dans ledit ergot (4) et/ou dans un creux (7) dudit élément d'appui (3).

2. Ensemble de raccord de disque de frein/moyeu de frein selon la revendication 1, **caractérisé en ce que** chaque élément intermédiaire (5) est recouvert par l'ergot y affecté (4) dans des zones définies à un petit écart en sens radial, du côté opposé audit moyeu de disque de frein (2) en tous les autres regards.

3. Ensemble de raccord de disque de frein/moyeu de frein selon une quelconque des revendications précédentes, **caractérisé en ce que** ledit élément intermédiaire (5) est configuré sous forme d'un boulon en prise dans un creux (7) dudit élément d'appui (3) et dans un creux (8) dudit ergot (4)

4. Ensemble de raccord de disque de frein/moyeu de frein selon une quelconque des revendications précédentes, **caractérisé en ce que** la section dudit boulon (5) a une configuration circulaire.

5. Ensemble de raccord de disque de frein/moyeu de frein selon une quelconque des revendications précédentes, **caractérisé en ce que** la section dudit boulon (5) a une configuration elliptique.

6. Ensemble de raccord de disque de frein/moyeu de frein selon une quelconque des revendications précédentes, **caractérisé en ce que** ladite aire de section dudit boulon (5) présente la forme d'un polygone régulier.

7. Ensemble de raccord de disque de frein/moyeu de frein selon une quelconque des revendications précédentes, **caractérisé en ce que** ledit élément intermédiaire (5) porte contre ledit élément d'appui (3), de façon positive, en un sens radial.

8. Ensemble de raccord de disque de frein/moyeu de frein selon une quelconque des revendications précédentes, **caractérisé en ce que** ledit boulon (5) présente la forme d'un corps creux, de préférence tubulaire.

9. Ensemble de raccord de disque de frein/moyeu de frein selon une quelconque des revendications précédentes, **caractérisé en ce que** ledit élément intermédiaire (5) consiste en acier à une basse conductibilité thermique, de préférence en acier inoxydable.

10. Ensemble de raccord de disque de frein/moyeu de frein selon une quelconque des revendications précédentes, **caractérisé en ce que** le rayon de courbure dudit creux (7) dans ledit élément d'appui (3) correspond au rayon dudit élément intermédiaire cylindrique (5), et **en ce que** la courbure dudit creux (8) dans ledit ergot (4) surpasse le rayon dudit élément intermédiaire (5).

11. Ensemble de raccord de disque de frein/moyeu de frein selon une quelconque des revendications précédentes, **caractérisé en ce que** ledit boulon (5) présente une patte (9) de son côté terminal, qui porte contre ledit élément d'appui (3).

12. Ensemble de raccord de disque de frein/moyeu de frein selon une quelconque des revendications précédentes, **caractérisé en ce qu'**un étrier (6) à deux pattes élastiques (14), s'étendant latéralement, dont chacune recouvre un élément intermédiaire (5) du côté de face.

13. Ensemble de raccord de disque de frein/moyeu de frein selon une quelconque des revendications précédentes, **caractérisé en ce que** ledit élément intermédiaire (5) a une forme en bande.

14. Ensemble de raccord de disque de frein/moyeu de frein selon une quelconque des revendications précédentes, **caractérisé en ce que** ledit élément intermédiaire (5) consiste en un élément de tôle en bande.

15. Ensemble de raccord de disque de frein/moyeu de frein selon une quelconque des revendications précédentes, **caractérisé en ce que** les deux bords opposés de ladite tôle sont formés en partie épaisse (12), définissant une aire noyée relativement à eux, contre laquelle porte ledit élément d'appui y affecté (3).

16. Ensemble de raccord de disque de frein/moyeu de frein selon une quelconque des revendications précédentes, **caractérisé en ce que,** du côté opposé à ladite aire, une saillie (13) est intégralement formée, qui se trouve en prise dans ledit creux (8), au dernier étant formé en goulotte.

17. Ensemble de raccord de disque de frein/moyeu de frein selon une quelconque des revendications précédentes 14 ou 15, **caractérisé en ce que** ledit élément intermédiaire en bande (5) porte, de façon positive, contre ledit élément d'appui (3) en sens radial.

18. Ensemble de raccord de disque de frein/moyeu de frein selon une quelconque des revendications précédentes, **caractérisé en ce que** lesdits creux (7, 8) sont formés dans des surfaces desdits ergots et desdits éléments d'appui, qui s'étendent le long d'un sens entièrement ou essentiellement radial relativement à l'axe de révolution du disque de frein.

19. Ensemble de raccord de disque de frein/moyeu de frein selon une quelconque des revendications précédentes, **caractérisé en ce que** lesdits éléments intermédiaires (5) se trouvent en prise dans lesdits creux (7, 8) d'une telle manière, qu'ils soient serrés en sens radial vers l'intérieur et vers l'extérieur par du matériau respectif desdits ergots (4) et desdits éléments d'appui (3), qui se joignent auxdits creux.
